(19) **Europäisches Patentamt European Patent Office Office européen des brevets**

(11) **EP 1 779 340 B1**

(12) **FASCICULE DE BREVET EUROPEEN**

(45) Date de publication et mention
de la délivrance du brevet:
**16.02.2011 Bulletin 2011/07**

(21) Numéro de dépôt: **05777212.1**

(22) Date de dépôt: **14.06.2005**

(51) Int Cl.:
*G07F 19/00* (2006.01)    *G07F 17/24* (2006.01)

(86) Numéro de dépôt international:
**PCT/FR2005/001477**

(87) Numéro de publication internationale:
**WO 2006/005838 (19.01.2006 Gazette 2006/03)**

(54) **SYSTEME DE PAIEMENT PAR SUITE DE JETONS**

AUF JETONFOLGE BASIERENDES ZAHLUNGSSYSTEM

TOKEN SEQUENCE PAYMENT SYSTEM

(84) Etats contractants désignés:
**AT BE BG CH CY CZ DE DK EE ES FI FR GB GR HU IE IS IT LI LT LU MC NL PL PT RO SE SI SK TR**

(30) Priorité: **17.06.2004 FR 0406604**

(43) Date de publication de la demande:
**02.05.2007 Bulletin 2007/18**

(73) Titulaire: **FRANCE TELECOM**
**75015 Paris (FR)**

(72) Inventeurs:
 • **SIBERT, Hervé**
  **F-14000 CAEN (FR)**
 • **CALMELS, Benoît**
  **F-75017 Paris (FR)**
 • **CANARD, Sébastien**
  **F-14000 Caen (FR)**

 • **PICQUENOT, David**
  **F-14280 SAINT CONTEST (FR)**
 • **SAIF, Ahmad**
  **F-14000 CAEN (FR)**

(74) Mandataire: **Loisel, Bertrand et al**
**Cabinet Plasseraud**
**52 rue de la Victoire**
**75440 Paris Cedex 09 (FR)**

(56) Documents cités:
  **EP-A- 0 833 285    WO-A-01/46920**
  **WO-A-02/097736    US-B1- 6 467 685**

 • **ELLIS CHI: "Evaluation of Micropayment Schemes" HP LABORATORIES TECHNICAL REPORT, no. 97-14, 13 janvier 1997 (1997-01-13), XP002183855 PALO ALTO, CA, USA**

**Description**

La présente invention concerne un procédé de paiement à distance ainsi qu'un système, un terminal de paiement et un serveur centralisé de paiement pour la mise en oeuvre de ce procédé.

Dans le domaine du paiement électronique, les systèmes se décomposent, du point de vue de leur utilisation, en deux phases. La première consiste à l'acquisition ou la recharge du moyen de paiement auprès du fournisseur de ce moyen. La seconde correspond à l'utilisation proprement dite de ce moyen de paiement pour acquérir un bien ou un service.

Dans l'état de l'art actuel, on trouve essentiellement les moyens de paiement suivants :

- l'utilisation de comptes prépayés conservés sur des serveurs, accessibles par un réseau de communication (internet, liaison spécialisée,...). Ces comptes ne font qu'associer l'identité de l'utilisateur (identifiant+mot de passe) au solde de leur compte, et en cas de contestation par l'utilisateur, rien ne permet de prouver que, par exemple, le serveur a débité le compte de l'utilisateur sans le consentement de celui-ci. De plus, l'accès à ces serveurs nécessite un navigateur internet sur le terminal de l'utilisateur même dans le cadre d'une utilisation mobile, et le paiement d'un bien ou d'un service se fait via le réseau internet, ne mettant ainsi pas à profit la proximité physique possible entre l'utilisateur et le point de délivrance du bien ou du service ;
- l'utilisation de codes de paiement temporaires tels que ceux délivrés par e-Carte Bleue nécessite un accès à internet, et possède les mêmes limitations que les comptes prépayés décris précédemment ;
- l'utilisation de cartes de paiement, telles que les porte-monnaie électroniques ou les cartes bancaires : le principal inconvénient est, pour l'utilisateur, la contrainte de posséder et transporter une telle carte. De plus, le coût du déploiement des cartes doit être supporté. En pratique, ce sont les utilisateurs (sous forme d'un abonnement) et les fournisseurs de services adhérents au système qui supportent ces coûts. Dans le cas des cartes bancaires, ces coûts ne sont pas adaptés au paiement de petites sommes. Dans le cas de porte-monnaie électroniques, ces coûts sont moins élevés, mais aucune protection n'empêche un voleur d'utiliser le porte-monnaie à la place de l'utilisateur légitime ;
- l'utilisation de cartes prépayées physiques : ce système pose essentiellement le problème de la distribution des cartes du point de vue juridique en raison de l'anonymat de leur utilisateur, et logistique pour ce qui est de leur distribution. De plus, de même que pour les comptes prépayés, rien ne permet de résoudre un conflit entre l'utilisateur et le fournisseur du moyen de paiement ;
- l'utilisation de cartes prépayées électroniques : de même que pour les cartes physiques, rien ne permet de résoudre un conflit entre l'utilisateur et le fournisseur du moyen de paiement ;
- l'utilisation de porte-monnaie électroniques logiciels : les systèmes existants utilisent des fonctions de cryptographie très coûteuses (signatures simples, signatures aveugles...) qui doivent être exécutées à chaque paiement, et sont donc incompatibles avec des terminaux ayant des capacités de calcul limitées ;
- l'utilisation de systèmes de paiement par agrégation sur facture : ces systèmes lient l'identification de l'utilisateur à l'identification de son terminal mobile au sein d'un réseau (numéro de téléphone fixe ou mobile, adresse internet), et sont donc peu portables. Le document WO01/46920 est un exemple de tels systèmes. Certains de ces systèmes possèdent une interface de type compte prépayé, avec les inconvénients décrits ci-dessus.

De plus, la plupart de ces systèmes ne garantissent aucune confidentialité pour l'utilisateur, dans le sens où, lors de la phase d'acquisition ou de recharge du moyen de paiement, tous lient le moyen de paiement à un compte dont le détenteur est connu du fournisseur de la solution de paiement. Les seules exceptions sont, d'une part, les cartes prépayées, dont les inconvénients ont été décrits et, d'autre part, certains porte-monnaie. Mais les protocoles cryptographiques de ces derniers utilisés pour assurer cette confidentialité sont lourds et doivent être exécutés à chaque acte de paiement, ce qui, d'un point de vue pratique, est trop coûteux, voire inaccessible pour des terminaux aux capacités de calcul limitées. L'article "Evaluation of Micropayment Schemes" par Ellis Chi publié le 13 janvier 1997 dans la recrue HP LABORATORIES TECHNICAL REPORT no 97-14 décrit quatre procédés de micropayements connus.

Le but de l'invention est donc de pallier ces inconvénients en proposant un système et un procédé de paiement fonctionnant avec un terminal de paiement ayant des capacités de calcul limitées mais pouvant communiquer aussi bien avec le serveur centralisé de paiement qu'avec le fournisseur du bien ou du service.

Un autre but de l'invention est de permettre au client de réfuter un paiement vis-à-vis du serveur de paiement si ce paiement n'a effectivement jamais eu lieu.

Et un autre but de l'invention est de faire que le paiement effectif d'un bien ou d'un service par le client puisse être prouvé par le serveur de paiement.

L'objet de l'invention est donc un procédé de paiement à distance entre un terminal de paiement utilisé par un utilisateur pour effectuer la transaction d'un bien ou d'un service délivré par une borne de biens et services, le terminal de paiement étant en communication avec un serveur centralisé de paiement, caractérisé en ce qu'il comporte les étapes suivantes :

a) le terminal de paiement possède préalablement une certaine quantité d'unités de compte de paiement sous forme d'une suite de jetons telle que la connaissance d'un jeton donné ne permet que la connaissance des jetons précédents, un jeton étant égal à une unité de compte, et

- le serveur centralisé de paiement mémorise le premier jeton de la suite et le nombre de jetons, puis

b) le terminal de paiement et la borne de biens et services définissent le montant de la transaction sous la forme d'un nombre entier d'unités de compte, puis

c) le terminal de paiement émet le jeton de la suite, tel que son numéro d'ordre soit égal à la somme du numéro d'ordre du jeton envoyé lors de la transaction précédente et du nombre d'unités de compte de la transaction, ainsi que le nombre d'unités de compte de la transaction en direction du serveur centralisé de paiement, puis

d) le serveur centralisé de paiement vérifie la validité du jeton émis en déduisant, à partir de celui-ci, le jeton initial de la liste et en comparant la valeur obtenue avec celle mémorisée préalablement,

e) si ces deux valeurs sont égales, la transaction est validée et le serveur centralisé de paiement émet en direction du terminal de paiement une autorisation de transaction, puis

f) le terminal de paiement transmet à la borne de biens et services l'autorisation de transaction, ce qui déclenche la délivrance du bien ou service.

D'autres caractéristiques sont :

- les étapes e) et f) sont remplacées par l'étape

e') si ces deux valeurs sont égales, la transaction est validée et le serveur centralisé de paiement émet en direction de la borne de biens et services l'autorisation de transaction, ce qui déclenche la délivrance du bien ou du service ;

- la suite de jetons est telle qu'un jeton précédent se déduit du jeton suivant par une fonction de hachage ;
- le dernier jeton de la suite de jetons est en outre un nombre aléatoire ;
- l'étape a) comporte les étapes de :

$a_1$) création d'une suite de jetons par le terminal de paiement,
$a_2$) création d'un message par le terminal de paiement comportant au moins le premier jeton de la suite et le nombre de jetons,
$a_3$) envoi du message au serveur centralisé de paiement,
$a_4$) stockage d'au moins une partie du message par le serveur centralisé de paiement afin de suivre et valider les transactions effectuées par le terminal de paiement ;

- le message possède en outre une signature électronique ;
- les étapes $a_1$) à $a_3$) sont effectuées par un terminal de gestion de comptes différent du terminal de paiement et alors, le procédé comporte en outre une étape de

$a_5$) transfert sécurisé du nombre de jetons et du dernier jeton de la suite de jetons du terminal de gestion de compte au terminal de paiement ;

Suivant d'autres caractéristiques, l'invention concerne un système de paiement à distance entre un terminal de paiement utilisé par un utilisateur pour effectuer la transaction d'un bien ou d'un service délivré par une borne de biens et services, le terminal de paiement étant en communication avec un serveur centralisé de paiement, caractérisé en ce que le terminal de paiement comporte des moyens de stockage d'une certaine quantité d'unités de compte de paiement sous forme d'une suite de jetons telle que la connaissance d'un jeton donné ne permet que la connaissance des jetons précédents, un jeton étant égal à une unité de compte, et
le serveur centralisé de paiement comporte des moyens de stockage du premier jeton de la suite et du nombre de jetons, et
le terminal de paiement et la borne de biens et services comportent des moyens de communication et de transaction apte à définir le nombre de jetons correspondant à la transaction, et
les moyens de communication du terminal de paiement sont adaptés pour transmettre au serveur centralisé de paiement le jeton de la suite, tel que son numéro d'ordre soit égal à la somme du numéro d'ordre du jeton envoyé lors de la transaction précédente et du nombre d'unités de compte de la transaction, ainsi que le nombre d'unités de compte de la transaction, et

le serveur centralisé de paiement comporte des moyens de calcul du jeton initial à partir du jeton reçu et du nombre d'unités de compte de la transaction et des moyens de comparaison du résultat de ce calcul avec la valeur du premier jeton stocké dans les moyens de stockage, et

si les deux valeurs sont égales, les moyens de transmission du serveur centralisé de paiements sont adaptés pour transmettre une autorisation de transaction au terminal de paiement, et

les moyens de communication du terminal de paiement sont adaptés pour transmettre l'autorisation de transaction reçue à la borne de biens et services pour déclenchement de la délivrance du bien ou service.

Le terminal de paiement pour la mise en oeuvre du procédé se caractérise en ce qu'il comporte au moins :

- des moyens de transmission pour communiquer avec une borne de biens et services et un serveur centralisé de paiement, les dits moyens de transmission étant connectés à
  des moyens de stockage d'une suite de jetons, chaque jeton représentant une valeur de compte de paiement, et telle que la connaissance d'un jeton donné ne permet que la connaissance des jetons précédents.
- des moyens de transmission pour communiquer avec un terminal de paiement et, optionnellement une borne de biens et services, connectés à
  des moyens de stockage d'au moins le premier élément d'une suite de jetons et du nombre de jetons de cette suite, chaque jeton représentant une valeur de compte de paiement, et telle que la connaissance d'un jeton donné ne permet que la connaissance des jetons précédents, et à
  des moyens de calcul du premier élément de la suite à partir de la connaissance d'un jeton quelconque de cette liste, autre que le premier, et du numéro d'ordre dans la liste de celui-ci, et
  des moyens de comparaison du résultat obtenu par les moyens de calcul avec la valeur du premier jeton stocké par les moyens de stockage, connectés à des moyens de création d'une autorisation de transaction lors d'une comparaison positive.

L'invention sera mieux comprise à la lumière de la description qui va suivre donnée uniquement à titre d'exemple, et faite en référence aux dessins annexés dans lesquels :

- la figure 1 est un schéma synoptique du système de paiement selon un mode de réalisation.

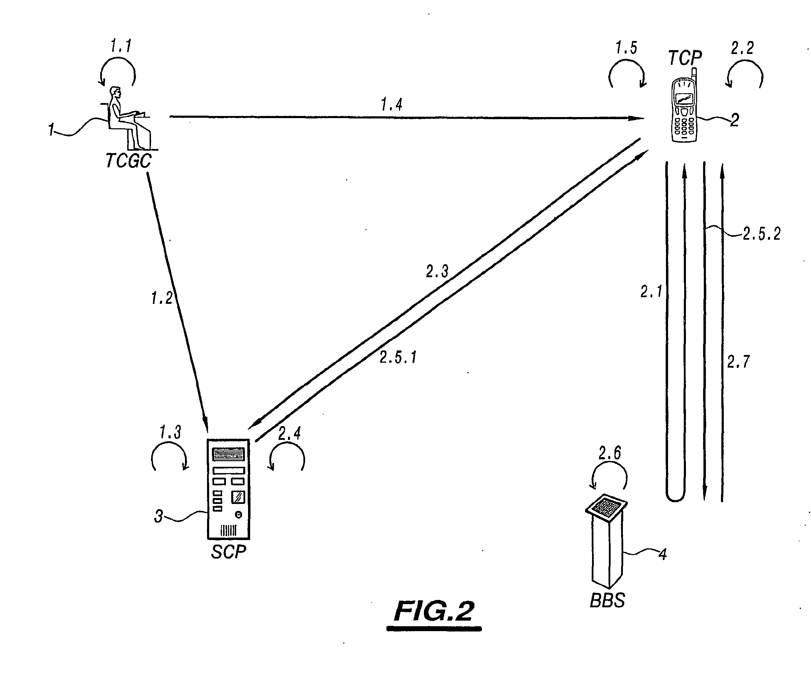

- la figure 2 est un schéma synoptique de système de paiement selon un deuxième mode de réalisation général,
- la figure 3 est un schéma synoptique d'un mode de réalisation détaillé, et
- la figure 4 est un schéma synoptique d'un second mode de réalisation détaillé.

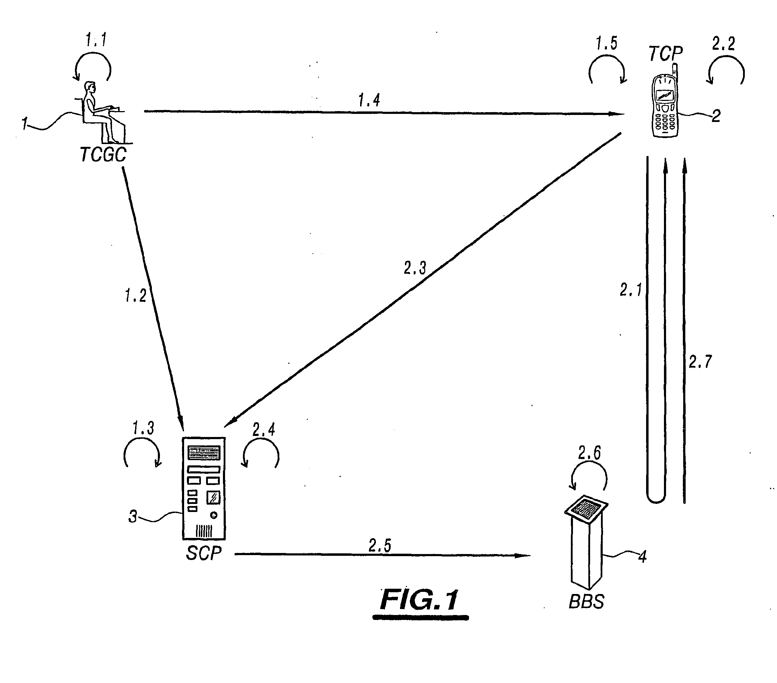

Le système de paiement figure 1, comporte quatre entités :

- un terminal 1 client de gestion de compte, noté aussi TCGC, représente le client utilisant le terminal à l'aide duquel il crée ou recherche son compte,
- un terminal 2 client de paiement, noté TCP, représente le client utilisant le terminal à l'aide duquel il effectue un paiement,
- un serveur 3 centralisé de paiement, noté SCP, qui conserve les données relatives aux comptes des clients,
- une borne 4 de biens et services, noté BBS, représente l'entité fournissant le(s) bien(s) / service(s) en échange du paiement.

Le terminal 1 client de gestion de compte et le terminal 2 client de paiement peuvent être combinés dans un même dispositif physique à la disposition du client. Cependant, pour faciliter la lecture de la description, les deux terminaux seront représentés comme des entités séparées afin de faciliter la compréhension des différents flux d'informations.

Il doit être compris également que les différents équipements peuvent être des équipements dédiés à cette application ou des équipements multifonctionnels capables d'exécuter cette application.

Par exemple, le TCGC peut être un ordinateur de bureau et le TCP un téléphone mobile.

Le système, et le procédé, décrits utilisent une suite de jetons ($w_0$, $w_1$,...$w_n$) ayant les propriétés suivantes :

- à partir d'un terme wi de la suite, il est facile de calculer tous les termes précédents $w_j$, $j \leq i$,
- à partir d'un terme wi de la suite, il est pratiquement impossible de calculer les termes suivants $w_j$, $j > i$.

Grâce à ces propriétés, seul le créateur de la suite peut prouver à quelqu'un qu'il connaît le jeton $w_{i+1}$ alors qu'il n'a divulgué que le jeton $w_i$ et des jetons $w_j$ avec $j \leq i$.

Notons que dans la suite de n jetons se trouvent en fait n+1 éléments : ceci est dû au fait que divulguer $w_0$ ne

prouve rien sur la connaissance de la suite, puisqu'il ne permet de calculer aucun autre jeton de la suite que lui-même. Dans les utilisations usuelles des suites de jetons, l'élément $w_0$ sert de point de départ dans l'utilisation de la suite, afin d'enregistrer ou d'identifier celle-ci.

Lorsque des jetons d'une suite de jetons ($w_0$, $w_1$,..., $w_n$) ont été divulgués, alors, en notant $w_i$ le jeton de plus haut indice déjà divulgué, on peut calculer uniquement les jetons *($w_0$, $w_1$, ..., $w_i$)* de la suite. Si un nouveau jeton de cette suite est divulgué, on donne une valeur à ce jeton, qui est proportionnelle au nombre de jetons de la suite qu'on peut déduire facilement et qui sont autres que $w_0$, $w_1$,...et $w_i$. Par exemple, si le jeton $w_{i+1}$ est divulgué, il ne permet de déduire aucun jeton non déjà connu autre que lui-même. On attribue donc à la divulgation de ce jeton une valeur, qu'on appelle une *unité*. Si c'est le jeton $w_{i+2}$ qui est divulgué, les nouveaux jetons de la suite qu'on peut déduire sont lui-même et le jeton $w_{i+1}$. On attribue donc une valeur de 2 unités à la divulgation de $w_{i+2}$ si seuls $w_0$, $w_1$,...et $w_i$ étaient connus. Si un jeton $w_j$ est divulgué, avec $j \leq i$, alors cette divulgation n'a aucune valeur, car le jeton était déjà connu. La valeur des nouveaux jetons vient du fait qu'on peut vérifier que ces jetons sont corrects en les corrélant aux jetons déjà connus. Par conséquent, la divulgation d'un jeton d'une suite dont on ne connaît aucun autre jeton n'a pas de valeur. C'est pour cette raison que la divulgation de $w_0$ n'a pas de valeur, comme nous l'avons dit.

Il est aussi possible de considérer que chaque jeton représente une unité de compte.

Ainsi, si le jeton $w_i$ a déjà été divulgué / dépensé, la divulgation du jeton $w_{i+1}$ correspond à la dépense d'une unité de compte puisque cette divulgation permet de déduire un jeton supplémentaire. Et, pour reprendre l'exemple ci-dessus, la divulgation du jeton $w_{i+2}$ correspond à la dépense de deux unités de compte puisqu'il est alors possible de déduire deux jetons supplémentaires.

Les suites de jetons ayant les propriétés indiquées ci-dessus peuvent être construites de différentes façons. Un mode de réalisation privilégié est le suivant.

Puisqu'il est facile de calculer tout jeton d'indice précédant l'indice d'un jeton donné, il faut commencer par calculer le jeton $w_n$, puis générer consécutivement les jetons $w_{n-1}$,..., $w_0$. Pour cela, le jeton $w_n$ est un nombre aléatoire qui doit être cryptographiquement sûr, c'est-à-dire qu'il faut que la probabilité de réussite de la recherche exhaustive soit quasi nulle. Pour créer les *n* autres éléments $w_{n-1}$,...,$w_0$ de la suite de jetons on utilise une fonction de hachage. Une fonction de hachage h possède les propriétés suivantes :

- *h* opère sur un message M de longueur arbitraire,
- le résultat *h*(M) possède une longueur / fixe,
- étant donné M, il est facile de calculer *h*(M),
- étant donné M, il est difficile de trouver un autre message $M_0$ tel que $h(M) = h(M_0)$

Parmi les fonctions de hachage, nous pouvons citer MD5 (*"Message Digest 5'*) ou SHA-1 (*"Secure Hash Algorithm"*). SHA-1 produit une sortie de 160 bits appelée message abrégé.

La fonction de hachage appliquée au nombre aléatoire $w_n$ permet d'obtenir un résultat $w_{n-1}$ (c'est-à-dire un nouveau jeton) auquel on applique à nouveau la fonction de hachage pour obtenir un jeton $w_{n-2}$ et ainsi de suite pour obtenir les n éléments $w_{n-1},...,w_0$:

$$h(w_n) = w_{n-1}, ..., h(w_1) = w_0$$

La suite de jetons est donc ($w_n$, $w_{n-1}$, $w_{n-2}$,..., $w_1$, $w_0$). Du fait des propriétés des fonctions de hachage, les propriétés des suites de jetons telles que définies plus haut sont vérifiées.

Dans le mode de réalisation décrit, seuls le TCGC, le TCP et le SCP manipulent des jetons.

Dans un mode de réalisation préféré, le procédé se déroule en 2 phases principales, figure 1. Chacune de ces phases est elle-même divisée en plusieurs étapes.

**Phase 1** : la phase 1 est exécutée une seule fois par suite de jetons créée : elle correspond à la création et à l'enregistrement de la suite de jetons. Elle comporte au moins les 5 étapes suivantes :

- étape 1.1 : le TCGC crée une suite de n jetons *($w_n$,..., $w_1$, $w_0$)*. Il crée un message m contenant $w_0$ et n. Il obtient éventuellement une signature S du message m, qui peut être soit sa propre signature, soit la signature de m par une entité tierce qui l'autorise à créer un compte de n jetons auprès du SCP. Cette signature peut être, par exemple, une signature de type Schnorr, une signature RSA, ou une signature partiellement aveugle.
- étape 1.2 : le TCGC envoie des données, dont le message m et la signature S éventuelle, au SCP, en utilisant un canal de communication (par exemple le réseau internet).
- étape 1.3 : si le SCP reçoit une signature, il associe la signature à l'entité qui a signé (ce peut être le client dans le cas d'une signature habituelle, ou bien une entité qui certifie l'authentification). Après d'éventuelles vérifications (par exemple, des vérifications liées au débit du Client de la somme de n unités), le SCP conserve en mémoire au moins une partie du message m, qui lui permet de suivre et d'effectuer les modifications du compte du Client : par exemple, le jeton $w_0$ peut lui servir à identifier le compte du Client.

- étape 1.4 : le TCGC envoie, à l'aide d'un protocole de communication (par exemple, Bluetooth, IrDA, NFC, WiFi), des données comprenant le jeton $w_n$ et le nombre n au TCP. Il est important de noter que cette étape doit prévoir les mesures de sécurité nécessaires pour qu'un tiers ne puisse pas avoir accès à $w_n$ puisque l'efficacité du procédé dépend du maintien au secret de cette valeur $w_n$.

- étape 1.5 : le TCP stocke tout ou partie des données reçues du TCGC afin de pouvoir effectuer les actes de paiement ultérieurs, qui font l'objet de la phase 2.

Dans le cas où le TCGC et le TCP sont une seule et même entité, les étapes 1.4 et 1.5 n'ont pas lieu.

**Phase 2** : la phase 2 décrit le déroulement de l'acte de paiement faisant intervenir le TCP, le BBS et le SCP. Cette phase est répétée à chaque acte de paiement. Elle comporte au moins les 7 étapes suivantes :

- étape 2.1 : cette étape consiste en l'acquisition par le TCP des données nécessaires pour effectuer l'acte de paiement. Cette acquisition peut se faire de plusieurs manières : par exemple, le TCP peut envoyer une requête au BBS contenant des informations sur le bien ou le service désiré, ou bien le Client lui-même peut avoir accès à des informations disponibles directement sur le BBS (par exemple, par une interface écran-clavier sur le BBS). Cette étape comprend l'initialisation d'une communication entre le TCP et le BBS à l'aide d'un protocole de communication qui peut-être sans fil (par exemple, Bluetooth, IrDA, NFC, WiFi), et elle s'achève par l'envoi du BBS au TCP, par exemple sur le même canal de communication, des modalités du paiement (par exemple un identifiant du BBS, un identifiant de transaction, le montant du paiement à effectuer...). Au moins un envoi du BBS vers le TCP est effectué à cette étape, qui peut aussi comprendre plusieurs échanges entre le TCP et le BBS,

- étape 2.2 : le TCP calcule le jeton nécessaire au paiement du bien ou du service, en fonction des modalités de paiement reçues à l'étape 1.4, et de l'unité (valeur d'un jeton) : si le montant est de k unités, alors le TCP calcule le jeton $w_{i+k}$, où $w_i$ est le dernier jeton envoyé au SCP par le TCP (lors du premier acte de paiement, ce jeton est $w_0$),

- étape 2.3 : le TCP envoie (par exemple, par GSM) une requête au SCP contenant le jeton de paiement $w_{i+k}$ ainsi que d'autres informations, par exemple l'identifiant du BBS, le montant, la nature du bien ou du service, le jeton $w_0$...,

- étape 2.4 : le SCP vérifie la validité du jeton reçu, par exemple en vérifiant, la relation $w_i=h^k(wi+k)$, ou $w_i$ est le dernier jeton reçu correspondant à la transaction précédente,

- étape 2.5 : le SCP renvoie (par exemple, par GSM) une autorisation de la transaction, qui peut être signée, par exemple à l'aide du mécanisme cryptographique de signature à clé publique, au BBS,

- étape 2.6 : le BBS vérifie l'autorisation reçue du SCP (par exemple, grâce au mécanisme de signature à clé publique),

- étape 2.7 : le BBS délivre le bien ou le service demandé.

Dans le cas où seul le TCP peut établir un canal de communication directe (par exemple, par GSM) avec le SCP, l'étape 2.5 est divisée en 2 étapes 2.5.1 et 2.5.2 :

- étape 2.5.1 : le SCP renvoie (par exemple, par GSM) une autorisation de la transaction, qui peut être signée, par exemple à l'aide du mécanisme cryptographique de signature à clé publique, au TCP,

- étape 2.5.2 : le TCP transmet l'autorisation au BBS à l'aide d'un protocole de communication qui peut être sans fil (par exemple, Bluetooth, IrDA, NFC, WiFi),

et la phase 2 comporte ainsi au moins les étapes 2.1, 2.2, 2.3, 2.4, 2.5.1, 2.5.2, 2.6 et 2.7.

Ayant décrit l'architecture et les différentes étapes d'un mode de réalisation générique, deux modes de réalisation détaillés, dont la différence essentielle réside dans l'utilisation de protocoles de communication différents entre le TCP et le BBS, vont maintenant être décrits.

DESCRIPTION DETAILLEE DU MODE DE REALISATION 1

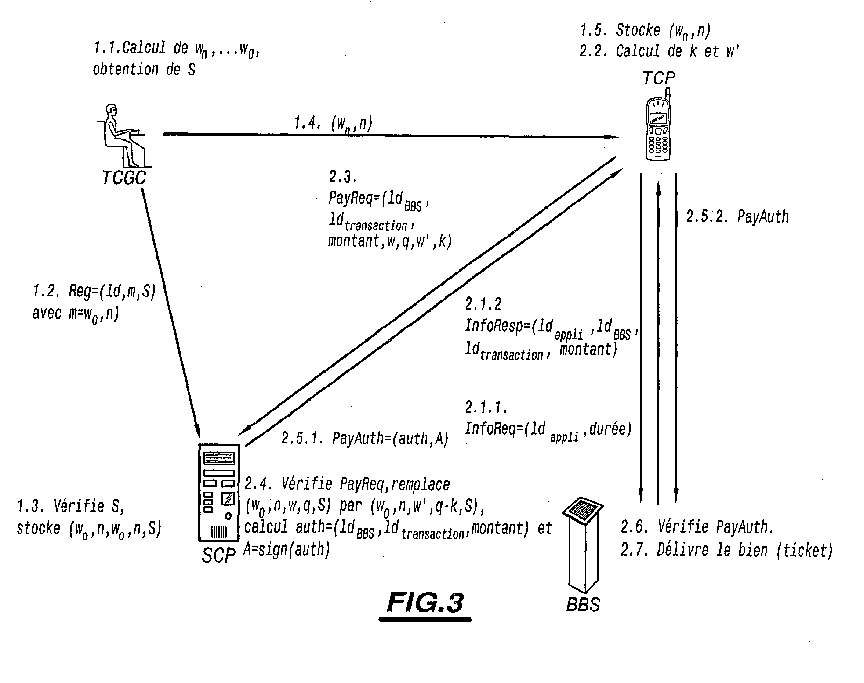

Le premier mode de réalisation, figure 3, est caractérisé par l'utilisation des protocoles suivant entre les entités :

| Entités | TCGC | SCP | TCP | BBS |
|---------|------|-----|-----|-----|
| TCGC | | | | |
| SCP | Internet | | | |
| TCP | Bluetooth | GSM | | |
| BBS | Pas de liaison | Pas de liaison | IrDA ou NFC | |

Les entités considérées dans ce mode de réalisation peuvent être :

- TCGC : un ordinateur muni d'une interface Bluetooth et d'un accès internet,
- SCP : un serveur relié à l'internet, au réseau GSM
- TCP : un téléphone mobile possédant une interface Bluetooth et une interface IrDA ou NFC, GSM
- BBS : une borne de paiement de parcmètre possédant une interface IrDA ou NFC (la même que pour le téléphone mobile).

Les étapes détaillées sont les suivantes :

**Phase 1** :

- étape 1.1 : le TCGC crée une suite de n jetons $(w_n,..., w_1, w_0)$. Pour initialiser la suite, c'est à dire calculer $w_n$, il fait appel à une action du Client (entrée d'une suite de caractères sur un clavier, ou mouvement d'une souris). Les jetons $w_{n-1},..., w_0$ sont calculés comme indiqué précédemment à l'aide d'une fonction de hachage, par exemple SHA-1. Le TCGC crée le message $m=(w_0, n)$. Le TCGC demande à une entité tierce (par exemple, une banque) de signer le message m à l'aide d'une clé privée de signature de cette entité. Le protocole de signature employé est de type Schnorr. On note S la signature de m.
- étape 1.2 : le TCGC envoie $Reg$=(Id, $m$, S), où Id est l'identité de l'entité qui a signé m, au SCP. La transmission se fait par une liaison sécurisée via internet (par exemple, en utilisant le protocole Secure HTTP). Le TCGC conserve (Id, $m$, S) en mémoire,
- étape 1.3 : le SCP reçoit Reg=(Id, m, S). Il récupère, grâce à la connaissance de Id, la clé publique de signature de l'entité tierce, et vérifie la validité de S à l'aide de cette clé. Le SCP conserve $(w_0, n, w_0, n,$ S). Ce quintuplet va lui servir à mémoriser le compte du client. Les deux premiers éléments ($w_0$ et n), ainsi que le dernier (S) du quintuplet restent fixes et vont servir pour identifier le compte du Client, tandis que le troisième et le quatrième, initialisés à $w_0$ et n, seront modifiés suivant le dernier jeton divulgué et la valeur des jetons restants, pour donner l'état courant du compte du Client,
- étape 1.4 : le TCGC envoie, via le protocole de communication Bluetooth, le message $m'=(w_n, n)$ au TCP,
- étape 1.5 : le TCP conserve le couple $(w_n, n)$.

**Phase 2** :

Dans cette phase, on suppose que le SCP a conservé un quintuplet $(w_0, n, w, p,$ S) et que le TCP a conservé un couple ($w_n$, q). C'est le cas en fin de Phase 1 avec $w=w_0$, $p=n$ et $q=n$. q représente donc le nombre d'unités de compte disponibles.

- étape 2.1.1 : le Client muni du terminal mobile (TCP) désire acheter un bien au BBS. On prend l'exemple de l'achat d'un ticket de stationnement à un parcmètre. Le TCP envoie au BBS un message $InfoReq=(Id_{appli}$, durée), où $Id_{appli}$ est un identifiant de l'application de paiement utilisée (par exemple, une application de paiement de parcmètre), en utilisant le protocole de communication IrDA (infrarouge),
- étape 2.1.2 : le BBS calcule le montant nécessaire au paiement suivant les données du message $InfoReq$. Il attribue un identifiant de transaction Idtransaction à la transaction initialisée avec le TCP. Cet identifiant est obtenu par le BBS en incrémentant le dernier identifiant de transaction qu'il a attribué. Il renvoie au TCP le message InfoResp= ($Id_{appli}$, IdBBS, $Id_{transaction}$, montant), où IdBBS est un identifiant qui permet au SCP de reconnaître le BBS, par le protocole de communication IrDA. Le BBS conserve $InfoResp$ en mémoire pour identifier la transaction,

- étape 2.2 : le TCP rappelle le couple $(w_n,$ q) qu'il a conservé en mémoire. Il calcule le nombre k d'unités correspondant au montant contenu dans *Inforesp*. Si $k$ est strictement plus grand que $q$, alors la transaction est interrompue, car le Client ne possède plus assez de jetons pour payer. Sinon, il calcule $w'=h^{q-k} (w_n)$ et $w=h^k(w')$, où $w=h^q (w_n)$ est le jeton dévoilé lors de la transaction précédente.
- étape 2.3 : le TCP envoie le message PayReq=($Id_{BBS}$, $Id_{transaction}$, montant, w, q, *w', k*) au SCP par message SMS sur le réseau GSM, et remplace dans sa mémoire le couple $(w_n,$ q) par $(w_n,$ *q-k)*,
- étape 2.4 : grâce à la donnée de *w* et q contenus dans *PayReq*, le SCP retrouve le quintuplet $(w_0,$ n, w, q, *S)*. Il vérifie que k correspond au montant contenu dans *PayReq* et que k est inférieur ou égal à q. Le SCP calcule $h^k(w')$ et compare le résultat avec *w*. S'il y a égalité, le SCP valide le paiement et remplace dans sa mémoire le quintuplet $(w_0,$ *n*, *w*, *q*, S) par le quintuplet $(w_0,$ *n*, *w*, *q-k*, S),
- étape 2.5.1 : le SCP crée le message *auth*=($Id_{BBS}$, $Id_{transaction}$, montant), et calcule la signature A de *auth* avec la clé privée de signature du SCP dans un protocole de signature à clé publique de type Schnorr. Il envoie par SMS sur le réseau GSM l'autorisation de transaction *PayAuth=(auth,* A) au TCP,
- étape 2.5.2 : le TCP transmet *PayAuth* au BBS par le protocole de communication IrDA,
- étape 2.6 : le BBS s'assure que l'identifiant $Id_{BBS}$ est le sien, puis il vérifie la validité de la signature A à partir de la clé publique du SCP,
- étape 2.7 : le BBS délivre le bien demandé correspondant au montant (dans l'exemple du ticket de stationnement, il calcule la durée correspondant au montant indiqué dans *PayAuth)* et conserve les données de transaction. Il marque la transaction *InfoResp* comme effectuée.

DESCRIPTION DETAILLEE DU MODE DE REALISATION 2

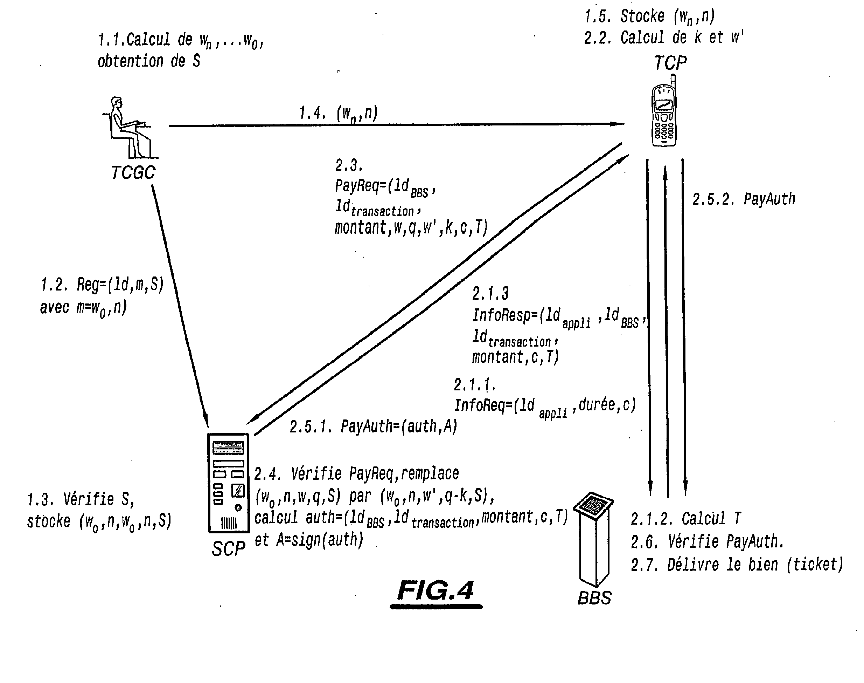

Le second mode de réalisation, figure 4, est caractérisé par l'utilisation des protocoles suivant entre les entités :

| Entités | TCGC | SCP | TCP | BBS |
|---|---|---|---|---|
| TCGC | | | | |
| SCP | Internet | | | |
| TCP | Bluetooth | GSM | | |
| BBS | Pas de liaison | Pas de liaison | Bluetooth | |

Les entités considérées dans ce mode de réalisation peuvent être :

- TCGC : un ordinateur muni d'une interface Bluetooth et d'un accès internet,
- SCP : un serveur relié à l'internet,
- TCP : un téléphone mobile possédant une interface Bluetooth,
- BBS : une borne de paiement de parcmètre possédant une interface Bluetooth.

Les étapes détaillées sont les suivantes :

**Phase 1** :

- étape 1.1 : le TCGC crée une suite de n jetons $(w_n, ...,w_1, w_0)$. Pour initialiser la suite, c'est-à-dire calculer $w_n$, il fait appel à une action du Client (entrée d'une suite de caractères sur un clavier, ou mouvement d'une souris). Les jetons $w_{n-1},..., w_0$ sont calculés, comme indiqué précédemment, à l'aide d'une fonction de hachage, par exemple SHA-1. Le TCGC crée le message $m=(w_0, n)$. Le TCGC demande à une entité tierce (par exemple, une banque) de signer le message m à l'aide d'une clé privée de signature de cette entité. Le protocole de signature employé est une signature partiellement aveugle. On note S la signature de m,
- étape 1.2 : le TCGC envoie *Reg=(Id, m,* S), où Id est l'identité de l'entité qui a signé m, au SCP. La transmission se fait par une liaison sécurisée via internet (par exemple, en utilisant le protocole Secure HTTP). Le TCGC conserve (Id, *m*, S) en mémoire,

- étape 1.3 : le SCP reçoit Reg=(Id, m, S). Il récupère, grâce à la connaissance de Id, la clé publique de signature de l'entité tierce, et vérifie la validité de S à l'aide de cette clé. Le SCP conserve $(w_0, n, w_0, n, S)$. Ce quintuplet va lui servir à mémoriser le compte du client. Les deux premiers éléments ($w_0$ et n), ainsi que le dernier (S) du quintuplet restent fixes et vont servir pour identifier le compte du Client, tandis que le troisième et le quatrième, initialisés à $w_0$ et n, seront modifiés suivant le dernier jeton divulgué et la valeur des jetons restants, pour donner l'état courant du compte du Client,
- étape 1.4 : le TCGC envoie, via le protocole de communication Bluetooth, le message $m'=(w_n, n)$ au TCP,
- étape 1.5 : le TCP conserve le couple ($w_n$, n).

**Phase 2** :

Dans cette phase, on suppose que le SCP a conservé un quintuplet $(w_0, n, w, p, S)$ et que le TCP a conservé un couple ($w_n$, q). C'est le cas en fin de Phase 1 avec $w=w_0, p=n$ et $q=n$.

- étape 2.1.1 : le Client muni du terminal mobile (TCP) désire acheter un bien au BBS (on peut prendre comme exemple l'achat d'un ticket de stationnement à un parcmètre). Le TCP envoie au BBS un message InfoReq=(Id$_{appli}$, durée, c), où Id$_{appli}$ est un identifiant de l'application de paiement utilisée (par exemple, une application de paiement de parcmètre), et c un nombre pseudo-aléatoire calculé par le TCP. La transmission se fait par Bluetooth,
- étape 2.1.2 : le BBS calcule le montant nécessaire au paiement suivant les données du message InfoReq. Il attribue un identifiant de transaction Id$_{transaction}$ à la transaction initialisée avec le TCP. Cet identifiant est obtenu par le BBS en incrémentant le dernier identifiant de transaction qu'il a attribué. Le BBS signe c à l'aide de sa clé secrète dans un protocole de signature à clé publique de type Schnorr. La signature obtenue est notée T,
- étape 2.1.3 : le BBS renvoie au TCP le message InfoResp=(Id$_{appli}$, Id$_{BBS}$, Id$_{transaction}$, montant, c, T), où Id$_{BBS}$ est un identifiant qui permet au SCP de reconnaître le BBS, par le protocole de communication Bluetooth. Le BBS conserve *InfoResp* en mémoire pour identifier la transaction,
- étape 2.2 : le TCP rappelle le couple ($w_n$, q) qu'il a conservé en mémoire. Il calcule le nombre k d'unités correspondant au montant contenu dans InfoResp. Si k est strictement plus grand que q, alors la transaction est interrompue, car le Client ne possède plus assez de jetons pour payer. Sinon, il calcule $w'=_h{}^{q-k}(w_n)$ et $w=h^k(w')$,
- étape 2.3 : le TCP envoie le message PayReq=(Id$_{BBS}$, Id$_{transaction}$, montant, w, q, w', k, c, T) au SCP par message SMS sur le réseau GSM, et remplace dans sa mémoire le couple ($w_n$, q) par ($w_n$, q-k),
- étape 2.4 : le SCP vérifie la validité de T à partir de c et de la clé publique de la borne qu'il connaît grâce à Id$_{BBS}$. Grâce à la donnée de w et q contenus dans *PayReq,* le SCP retrouve le quintuplet $(w_0, n, w, q, S)$. Il vérifie que k correspond au montant contenu dans *PayReq* et que k est inférieur ou égal à q. Le SCP calcule $h^k(w')$ et compare le résultat avec *w*. S'il y a égalité, le SCP valide le paiement et remplace dans sa mémoire le quintuplet ($w_0$, n, w, q, S) par le quintuplet $(w_0, n, w', q-k, S)$,
- étape 2.5.1 : le SCP crée le message auth=(Id$_{BBS}$, Id$_{transaction}$, montant, c, T), et calcule la signature A de *auth* avec la clé privée de signature du SCP dans un protocole de signature à clé publique de type Schnorr. Il envoie par SMS sur le réseau GSM l'autorisation de transaction *PayAuth=(auth,* A) au TCP,

  - étape 2.5.2 : le TCP transmet *PayAuth* au BBS par le protocole de communication IrDA,
  - étape 2.6 : le BBS s'assure que l'identifiant Id$_{BBS}$ est le sien, puis il vérifie la validité de la signature A à partir de la clé publique du SCP,
  - étape 2.7 : le BBS délivre le bien demandé correspondant au montant (dans l'exemple du ticket de stationnement, il calcule la durée correspondant au montant indiqué dans *PayAuth*) et conserve les données de transaction. Il marque la transaction InfoResp comme effectuée.

Ainsi, le système de paiement à distance permet l'utilisation de terminaux ayant une capacité de calcul limitée, puisque la fonction utilisée pour le calcul des jetons est une fonction arithmétiquement simple et bien connue.

De plus, si un paiement n'a jamais eu lieu, le serveur SCP n'est pas en mesure de connaître les jetons correspondants et donc le client garde la maîtrise de ses actes de paiements.

Mais, réciproquement, le client ne peut pas réfuter un paiement ayant effectivement eu lieu. En effet, le SCP connaissant les jetons correspondants, cette connaissance est un moyen de preuve que le terminal a bien exécuté une transaction.

**Revendications**

1. Procédé de paiement à distance entre un terminal (2) de paiement utilisé par un utilisateur pour effectuer la transaction d'un bien ou d'un service délivré par une borne (4) de biens et services, le terminal (2) de paiement étant en communication avec un serveur (3) centralisé de paiement, **caractérisé en ce qu'**il comporte les étapes suivantes :

   a) le terminal (2) de paiement possède préalablement une certaine quantité (n) d'unités de-compte de paiement sous forme d'une suite de jetons ($w_o$, n) telle que la connaissance d'un jeton donné ne permet que la connaissance des jetons précédents, un jeton étant égal à une unité de compte, et

   - le serveur (3) centralisé de paiement mémorise le premier jeton ($w_o$) de la suite et le nombre (n) de jetons, puis

   b) le terminal (2) de paiement et la borne (4) de biens et services définissent le montant de la transaction sous la forme d'un nombre entier (p) d'unités de compte, puis
   c) le terminal (2) de paiement émet le jeton ($w_{i+p}$) de la suite, tel que son numéro d'ordre (i+p) soit égal à la somme du numéro d'ordre (i) du jeton ($w_i$) envoyé lors de la transaction précédente et du nombre (p) d'unités de compte de la transaction, ainsi que le nombre (p) d'unités de compte de la transaction en direction du serveur (3) centralisé de paiement, puis
   d) le serveur (3) centralisé de paiement vérifie la validité du jeton ($w_{i+p}$) émis en déduisant, à partir de celui-ci, le jeton initial ($w_o$) de la liste et en comparant la valeur obtenue avec celle mémorisée préalablement,
   e) si ces deux valeurs sont égales, la transaction est validée et le serveur (3) centralisé de paiement émet en direction du terminal (2) de paiement une autorisation de transaction, puis
   f) le terminal (2) de paiement transmet à la borne (4) de biens et services l'autorisation de transaction, ce qui déclenche la délivrance du bien ou service.

2. Procédé de paiement à distance selon la revendication 1, **caractérisé en ce que** les étapes e) et f) sont remplacées par l'étape

   e') si ces deux valeurs sont égales, la transaction est validée et le serveur (3) centralisé de paiement émet en direction de la borne (4) de biens et services l'autorisation de transaction, ce qui déclenche la délivrance du bien ou du service.

3. Procédé de paiement à distance selon la revendication 1 ou 2, **caractérisé en ce que** la suite de jetons est telle qu'un jeton précédent se déduit du jeton suivant par une fonction de hachage.

4. Procédé de paiement à distance selon la revendication 3, **caractérisé en ce que** le dernier jeton ($w_n$) de la suite de jetons est en outre un nombre aléatoire.

5. Procédé de paiement à distance selon l'une quelconque des revendications précédentes, **caractérisé en ce que** l'étape a) comporte les étapes de:

   $a_1$) création d'une suite de jetons par le terminal (2) de paiement,
   $a_2$) création d'un message (m) par le terminal (2) de paiement comportant au moins le premier jeton ($w_o$) de la suite et le nombre (n) de jetons,
   $a_3$) envoi du message (m) au serveur (3) centralisé de paiement,
   $a_4$) stockage d'au moins une partie du message (m) par le serveur (3) centralisé de paiement afin de suivre et valider les transactions effectuées par le terminal de paiement.

6. Procédé de paiement à distance selon la revendication 5, **caractérisé en ce que** le message (m) possède en outre une signature électronique.

7. Procédé de paiement à distance selon les revendications 5 ou 6, **caractérisé en ce que** les étapes $a_1$) à $a_3$) sont effectuées par un terminal (1) de gestion de comptes différent du terminal de paiement et alors, le procédé comporte en outre une étape de

   $a_5$) transfert sécurisé du nombre de jetons et du dernier jeton de la suite de jetons du terminal (1) de gestion de compte au terminal de paiement (2).

8. Système de paiement à distance entre un terminal (2) de paiement utilisé par un utilisateur pour effectuer la transaction d'un bien ou d'un service délivré par une borne (4) de biens et services, le terminal (2) de paiement étant en communication avec un serveur (3) centralisé de paiement, **caractérisé en ce que** le terminal (2) de paiement comporte des moyens de stockage d'une certaine quantité d'unités de compte de paiement sous forme d'une suite de jetons ($w_o$, n) telle que la connaissance d'un jeton donné ne permet que la connaissance des jetons précédents, un jeton étant égal à une unité de compte, et

le serveur (3) centralisé de paiement comporte des moyens de stockage du premier jeton de la suite et du nombre de jetons, et

le terminal (2) de paiement et la borne (4) de biens et services comportent des moyens de communication et de transaction apte à définir le nombre de jetons correspondant à la transaction, et

les moyens de communication du terminal (2) de paiement sont adaptés pour transmettre au serveur (3) centralisé de paiement le jeton de la suite ($w_{i+p}$), tel que son numéro d'ordre (i+p) soit égal à la somme du numéro d'ordre (i) du jeton ($w_i$) envoyé lors de la transaction précédente et du nombre (p) d'unités de compte de la transaction, ainsi que le nombre (p) d'unités de compte de la transaction, et

le serveur centralisé (3) de paiement comporte des moyens de calcul du jeton initial ($w_o$) à partir du jeton ($w_{i+p}$) reçu et du nombre d'unités de compte de la transaction et des moyens de comparaison du résultat de ce calcul avec la valeur du premier jeton stocké dans les moyens de stockage, et

si les deux valeurs sont égales, les moyens de transmission du serveur (3) centralisé de paiements sont adaptés pour transmettre une autorisation de transaction au terminal (2) de paiement, et

les moyens de communication du terminal (2) de paiement sont adaptés pour transmettre l'autorisation de transaction reçue à la borne (4) de biens et services pour déclenchement de la délivrance du bien ou service.

9. Terminal (2) de paiement, utilisé par un utilisateur pour effectuer la transaction d'un bien ou d'un service délivré par une borne (4) de biens et services **caractérisé en ce qu'**il comporte au moins

des moyens de transmission pour communiquer avec la borne (4) et un serveur (3) centralisé de paiement, les dits moyens de transmission étant connectés à

des moyens de stockage d'une suite de jetons telle que la connaissance d'un jeton donné ne permet que la connaissance des jetons précédents , un jeton étant égal à une unité de compte de paiement,

des moyens pour définir, avec la borne (4), le montant de la transaction sous la forme d'un nombre entier (p) d'unités de compte,

des moyens pour émettre le jeton ($w_{i+p}$) de la suite, tel que son numéro d'ordre (i+p) soit égal à la somme du numéro d'ordre (i) du jeton ($w_i$) envoyé lors de la transaction précédente et du nombre (p) d'unités de compte de la transaction, ainsi que le nombre (p) d'unités de compte de la transaction en direction du serveur (3) centralisé de paiement,

des moyens pour recevoir une autorisation de transaction depuis le serveur (3),

des moyens pour transmettre à la borne (4) de biens et services l'autorisation de transaction, ce qui déclenche la délivrance du bien ou service.

10. Serveur (3) centralisé de paiement pour la mise en oeuvre du procédé selon l'une quelconque des revendications 1 à 7, **caractérisé en ce qu'**il comporte au moins des moyens de transmission pour communiquer avec un terminal (2) de paiement et, optionnellement une borne (4) de biens et services, connectés à

des moyens de stockage d'au moins le premier élément d'une suite de jetons et du nombre de jetons de cette suite, chaque jeton représentant une valeur de compte de paiement, et telle que la connaissance d'un jeton donné ne permet que la connaissance des jetons précédents, et à

des moyens de calcul du premier élément de la suite à partir de la connaissance d'un jeton quelconque de cette liste, autre que le premier, et du numéro d'ordre dans la liste de celui-ci, et

des moyens de comparaison du résultat obtenu par les moyens de calcul avec la valeur du premier jeton stocké par les moyens de stockage, connectés à des moyens de création d'une autorisation de transaction lors d'une comparaison positive.

## Claims

1. Method for remote payment between a payment terminal (2) used by a user to carry out a transaction for a good or for a service delivered by a goods and services base (4), the payment terminal (2) being in communication with a centralized payment server (3), **characterized in that** it comprises the following steps:

a) the payment terminal (2) has in advance a certain quantity (n) of units of account for payment in the form of a series of tokens ($w_o$, n) such that the knowledge of a given token allows only the knowledge of the preceding tokens, one token being equal to one unit of account, and

- the centralized payment server (3) stores the first token ($w_o$) of the series and the number (n) of tokens, then

b) the payment terminal (2) and the goods and services base (4) define the amount for the transaction in the form of a whole number (p) of units of account, then

c) the payment terminal (2) transmits the token ($w_{i+p}$) of the series, such that its sequence number (i+p) is equal to the sum of the sequence number (i) of the token ($w_i$) sent during the preceding transaction and of the number (p) of units of account of the transaction, and the number (p) of units of account of the transaction to the centralized payment server (3), then

d) the centralized payment server verifies the validity of the token ($w_{i+p}$) transmitted by deducting, from the latter, the initial token ($w_o$) of the list and by comparing the value obtained with that previously stored,

e) if these two values are equal, the transaction is validated and the centralized payment server (3) transmits to the payment terminal (2) a transaction authorization, then

f) the payment terminal (2) transmits to the goods and services base (4) the transaction authorization, which triggers the delivery of the good or service.

2. Method of remote payment according to Claim 1, **characterized in that** the steps e) and f) are replaced by the step

e') if these two values are equal, the transaction is validated and the centralized payment server (3) transmits to the goods and services base (4) the transaction authorization which triggers the delivery of the good or of the service.

3. Method for remote payment according to Claim 1 or 2, **characterized in that** the series of tokens is such that the preceding token is deducted from the next token by a hash function.

4. Method for remote payment according to Claim 3, **characterized in that** the last token ($w_n$) of the sequence of tokens is also a random number.

5. Method for remote payment according to any one of the preceding claims, **characterized in that** the step a) comprises the steps of:

$a_1$) creation of a series of tokens by the payment terminal (2),

$a_2$) creation of a message (m) by the payment terminal (2) comprising at least the first token ($w_o$) of the sequence and the number (n) of tokens,

$a_3$) transmission of the message (m) to the centralized payment server (3),

$a_4$) storage of at least a portion of the message (m) by the centralized payment server (3) in order to monitor and validate the transactions carried out by the payment terminal.

6. Method for remote payment according to Claim 5, **characterized in that** the message (m) also has an electronic signature.

7. Method for remote payment according to Claims 5 or 6, **characterized in that** the steps $a_1$) to $a_3$) are carried out by an account-management terminal (1) that differs from the payment terminal and then the method also comprises a step of

$a_5$) secure transfer of the number of tokens and of the last token of the series of tokens from the account-management terminal (1) to the payment terminal (2).

8. System for remote payment between a payment terminal (2) used by a user in order to carry out a transaction for a good or for a service delivered by a goods and services base (4), the payment terminal (2) being in communication with a centralized payment server (3), **characterized in that** the payment terminal (2) comprises means for storing a certain quantity of units of account for payment in the form of a series of tokens ($w_o$, n) such that the knowledge of a given token allows the knowledge of only the preceding tokens, one token being equal to one unit of account, and the centralized payment server (3) comprises means for storing the first token of the series and the number of tokens, and

the payment terminal (2) and the goods and services base (4) comprise communication and transaction means capable of defining the number of tokens corresponding to the transaction, and

the communication means of the payment terminal (2) are suitable for transmitting to the centralized payment server (3) the token of the series ($w_{i+p}$), such that its sequence number (i+p) is equal to the sum of the sequence number (i) of the token ($w_i$) sent during the preceding transaction and the number (p) of units of account for the transaction, and the number (p) of units of account for the transaction, and

the centralized payment server (3) comprises means for calculating the initial token ($w_o$) based on the token ($w_{i+p}$) received and on the number of units of account for the transaction and comprises means for comparing the result of this calculation with the value of the first token stored in the storage means, and

if the two values are equal, the transmission means of the centralized payment server (3) are capable of transmitting a transaction authorization to the payment terminal (2), and

the communication means of the payment terminal (2) are suitable for transmitting the transaction authorization received to the goods and services base (4) for triggering the delivery of the good or service.

9. Payment terminal (2) used by a user to carry out a transaction for a good or for a service delivered by a goods and services base (4), **characterized in that** it comprises at least

transmission means for communicating with the base (4) and a centralized payment server (3), said transmission means being connected to

means for storing a series of tokens such that the knowledge of a given token allows the knowledge of only the preceding tokens, one token being equal to one unit of account for payment,

means for defining, with the base (4), the amount of the transaction in the form of a whole number (p) of units of account,

means for transmitting the token ($w_{i+p}$) of the sequence, such that its sequence number (i+p) is equal to the sum of the sequence number (i) of the token ($w_i$) sent during the preceding transaction and the number (p) of units of account for the transaction, and the number (p) of units of account for the transaction to the centralized payment server (3),

means for receiving a transaction authorization from the server (3),

means for transmitting to the goods and services base (4) the transaction authorization which triggers the delivery of the good or service.

10. Centralized payment server (3) for applying the method according to any one of Claims 1 to 7, **characterized in that** it comprises at least transmission means for communicating with a payment terminal (2) and optionally a goods and services base (4) connected to

means for storing at least the first element of a series of tokens and the number of tokens of this series, each token representing a value of account for payment, and such that the knowledge of a given token allows the knowledge of only the preceding tokens, and to

means for calculating the first element of the series based on the knowledge of any token of this list, other than the first, and on the sequence number in the list of the latter, and

means for comparing the result obtained by the calculation means with the value of the first token stored by the storage means, connected to means for creating a transaction authorization when there is a positive comparison.

**Patentansprüche**

1. Verfahren zur Fernzahlung zwischen einem Zahlungsendgerät (2), das von einem Benutzer genutzt wird, um die Transaktion einer Ware oder einer Dienstleistung durchzuführen, die von einem Waren- und Dienstleistungsanschluss (4) ausgegeben wird, wobei das Zahlungsendgerät (2) mit einem zentralisierten Zahlungsserver (3) in Verbindung steht, **dadurch gekennzeichnet, dass** es die folgenden Schritte aufweist:

a) das Zahlungsendgerät (2) besitzt vorab eine bestimmte Menge (n) von Zahlungskontoeinheiten in Form einer derartigen Folge von Token ($w_0$, n), dass die Kenntnis eines gegebenen Tokens nur die Kenntnis der vorhergehenden Token erlaubt, wobei ein Token gleich einer Kontoeinheit ist, und

- der zentralisierte Zahlungsserver (3) speichert das erste Token (wo) der Folge und die Anzahl (n) von Token, dann

b) das Zahlungsendgerät (2) und der Waren- und Dienstleistungsanschluss (4) definieren den Betrag der Transaktion in Form einer ganzen Zahl (p) von Kontoeinheiten, dann

c) das Zahlungsendgerät (2) emittiert das Token ($w_{i+p}$) der Folge, derart, dass seine laufende Nummer (i+p) gleich der Summe der laufenden Nummer (i) des Tokens ($w_i$), das bei der vorhergehenden Transaktion gesendet wurde, und der Anzahl (p) von Kontoeinheiten der Transaktion ist, sowie die Anzahl (p) von Kontoeinheiten der Transaktion in Richtung des zentralisierten Zahlungsservers (3), dann

d) prüft der zentralisierte Zahlungsserver (3) die Gültigkeit des emittierten Tokens ($w_{i+p}$), indem er ausgehend von diesem das ursprüngliche Token (wo) der Liste ableitet und den erhaltenen Wert mit dem vorher gespeicherten vergleicht,

e) wenn diese beiden Werte gleich sind, wird die Transaktion validiert, und der zentralisierte Zahlungsserver (3) emittiert eine Transaktionsgenehmigung in Richtung des Zahlungsendgeräts (2), dann

f) überträgt das Zahlungsendgerät (2) die Transaktionsgenehmigung an den Waren- und Dienstleistungsanschluss (4), was die Ausgabe der Ware oder der Dienstleistung auslöst.

2. Fernzahlungsverfahren nach Anspruch 1, **dadurch gekennzeichnet, dass** die Schritte e) und f} ersetzt werden durch den Schritt

e') wenn diese zwei Werte gleich sind, wird die Transaktion validiert, und der zentralisierte Zahlungsserver (3) emittiert die Transaktionsgenehmigung in Richtung des Waren- und Dienstleistungsanschlusses (4), was die Ausgabe der Ware oder der Dienstleistung auslöst.

3. Fernzahlungsverfahren nach Anspruch 1 oder 2, **dadurch gekennzeichnet, dass** die Tokenfolge so ist, dass ein vorhergehendes Token sich aus dem folgenden Token durch eine Hashfunktion ableitet.

4. Fernzahlungsverfahren nach Anspruch 3, **dadurch gekennzeichnet, dass** das letzte Token ($w_n$) der Tokenfolge außerdem eine Zufallszahl ist.

5. Fernzahlungsverfahren nach einem der vorhergehenden Ansprüche, **dadurch gekennzeichnet, dass** der Schritt a) die folgenden Schritte aufweist:

$a_1$) Erzeugung einer Tokenfolge durch das Zahlungsendgerät (2),
$a_2$) Erzeugung einer Mitteilung (m) durch das Zahlungsendgerät (2), die mindestens das erste Token (wo) der Folge und die Anzahl (n) von Token aufweist,
$a_3$) Senden der Mitteilung (m) an den zentralisierten Zahlungsserver (3),
$a_4$) Speichern mindestens eines Teils der Mitteilung (m) durch den zentralisierten Zahlungsserver (3), um die vom Zahlungsendgerät durchgeführten Transaktionen zu verfolgen und zu validieren.

6. Fernzahlungsverfahren nach Anspruch 5, **dadurch gekennzeichnet, dass** die Mitteilung (m) außerdem eine elektronische Signatur besitzt.

7. Fernzahlungsverfahren nach den Ansprüchen 5 oder 6, **dadurch gekennzeichnet, dass** die Schritte $a_1$) bis $a_3$) von einem Endgerät (1) zur Verwaltung von Konten, das sich vom Zahlungsendgerät unterscheidet, durchgeführt werden, und dann das Verfahren außerdem einen Schritt aufweist der:

$a_5$) gesicherten Übertragung der Anzahl von Token und des letzten Tokens der Tokenfolge vom Kontenverwaltungsendgerät (1) an das Zahlungsendgerät (2).

8. System zur Fernzahlung zwischen einem Zahlungsendgerät (2), das von einem Benutzer genutzt wird, um die Transaktion einer Ware oder einer Dienstleistung durchzuführen, die von einem Waren- und Dienstleistungsanschluss (4) ausgegeben wird, wobei das Zahlungsendgerät (2) mit einem zentralisierten Zahlungsserver (3) in Verbindung steht, **dadurch gekennzeichnet, dass** das Zahlungsendgerät (2) Einrichtungen zur Speicherung einer bestimmten Menge von Zahlungskontoeinheiten in Form einer derartigen Folge von Token ($w_0$, n) aufweist, dass die Kenntnis eines gegebenen Tokens nur die Kenntnis der vorhergehenden Token erlaubt, wobei ein Token gleich einer Kontoeinheit ist, und der zentralisierte Zahlungsserver (3) Einrichtungen zum Speichern des ersten Tokens der Folge und der Anzahl von Token aufweist, und

das Zahlungsendgerät (2) und der Waren- und Dienstleistungsanschluss (4) Kommunikations- und Transaktionseinrichtungen aufweisen, die die Anzahl von Token entsprechend der Transaktion definieren können, und

die Kommunikationseinrichtungen des Zahlungsendgeräts (2) geeignet sind, um an den zentralisierten Zahlungsserver (3) das Token der Folge ($w_{i+p}$) derart, dass seine laufende Nummer (i+p) gleich der Summe der laufenden Nummer (i) des bei der vorhergehenden Transaktion gesendeten Tokens ($w_i$) und der Anzahl (p) von Kontoeinheiten der Transaktion ist, sowie die Anzahl (p) von Kontoeinheiten der Transaktion zu übertragen, und der zentralisierte Zahlungsserver (3) Einrichtungen zur Berechnung des ursprünglichen Tokens (wo) ausgehend von dem empfan-

genen Token ($w_{i+p}$) und der Anzahl von Kontoeinheiten der Transaktion und Einrichtungen zum Vergleich des Ergebnisses dieser Berechnung mit dem Wert des ersten in den Speichereinrichtungen gespeicherten Tokens aufweist, und

wenn die zwei Werte gleich sind, die Übertragungseinrichtungen des zentralisierten Zahlungsservers (3) geeignet sind, um eine Transaktionsgenehmigung an das Zahlungsendgerät (2) zu übertragen, und

die Kommunikationseinrichtungen des Zahlungsendgeräts (2) geeignet sind, um die empfangene Transaktionsgenehmigung zum Auslösen der Ausgabe der Ware oder der Dienstleistung an den Waren- und Dienstleistungsanschluss (4) zu übertragen.

9. Zahlungsendgerät (2), das von einem Benutzer genutzt wird, um die Transaktion einer von einem Waren- und Dienstleistungsanschluss (4) ausgegebenen Ware oder Dienstleistung durchzuführen, **dadurch gekennzeichnet, dass** es mindestens aufweist

Übertragungseinrichtungen, um mit dem Anschluss (4) und einem zentralisierten Zahlungsserver (3) zu kommunizieren, wobei die Übertragungseinrichtungen verbunden sind mit

Einrichtungen zum Speichern einer derartigen Tokenfolge, dass die Kenntnis eines gegebenen Tokens nur die Kenntnis der vorhergehenden Token erlaubt, wobei ein Token gleich einer Zahlungskontoeinheit ist,

Einrichtungen, um mit dem Anschluss (4) den Betrag der Transaktion in Form einer ganzen Zahl (p) von Kontoeinheiten zu definieren,

Einrichtungen, um das Token ($w_{i+p}$) der Folge, derart, dass seine laufende Nummer (i+p) gleich der Summe der laufenden Nummer (i) des Tokens ($w_i$), das in der vorhergehenden Transaktion gesendet wurde, und der Anzahl (p) von Kontoeinheiten der Transaktion ist, sowie die Anzahl (p) von Kontoeinheiten der Transaktion zum zentralisierten Zahlungsserver (3) zu emittieren,

Einrichtungen, um eine Transaktionsgenehmigung vom Server (3) zu empfangen,

Einrichtungen, um die Transaktionsgenehmigung an den Waren- und Dienstleistungsanschluss (4) zu übertragen, was die Ausgabe der Ware oder Dienstleistung auslöst.

10. Zentralisierter Zahlungsserver (3) zur Anwendung des Verfahrens nach einem der Ansprüche 1 bis 7, **dadurch gekennzeichnet, dass** er mindestens Übertragungseinrichtungen, um mit einem Zahlungsendgerät (2) zu kommunizieren, und optional einen Waren- und Dienstleistungsanschluss (4) aufweist, die verbunden sind mit Einrichtungen zum Speichern mindestens des ersten Elements einer Tokenfolge und der Anzahl von Token dieser Folge, wobei jedes Token einen Zahlungskontowert darstellt, und derart, dass die Kenntnis eines gegebenen Tokens nur die Kenntnis der vorhergehenden Token erlaubt, und mit Einrichtungen zur Berechnung des ersten Elements der Folge ausgehend von der Kenntnis eines beliebigen Tokens dieser Liste, anders als das erste, und dessen laufender Nummer in der Liste, und

Einrichtungen zum Vergleich des durch die Berechnungseinrichtungen erhaltenen Ergebnisses mit dem Wert des ersten von den Speichereinrichtungen gespeicherten Tokens, verbunden mit Einrichtungen zur Erzeugung einer Transaktionsgenehmigung bei einem positiven Vergleich.

*FIG.1*

**FIG.2**

1.5. Stocke $(w_n, n)$
2.2. Calcul de $k$ et $w'$

*TCP*

1.1.Calcul de $w_n, \ldots w_0$,
obtention de $S$

*TCGC*

1.4. $(w_n, n)$

2.3.
PayReq=($ld_{BBS}$,
$ld_{transaction}$,
montant,$w,q,w',k$)

2.5.2. PayAuth

1.2. Reg=($ld,m,S$)
avec $m=w_0,n$)

2.1.2
InfoResp=($ld_{appli}$, $ld_{BBS}$,
$ld_{transaction}$, montant)

2.1.1.
InfoReq=($ld_{appli}$, durée)

2.5.1. PayAuth=(auth,A)

1.3. Vérifie S,
stocke $(w_0,n,w_0,n,S)$

2.4. Vérifie PayReq,remplace
$(w_0,n,w,q,S)$ par $(w_0,n,w',q-k,S)$,
calcul auth=($ld_{BBS}$,$ld_{transaction}$,montant) et
*SCP* A=sign(auth)

2.6. Vérifie PayAuth.
2.7. Délivre le bien (ticket)

## FIG.3

*BBS*

2. Calcul de $k$ et $w'$

1.5. Stocke $(w_n, n)$
2.2. Calcul de $k$ et $w'$

1.1. Calcul de $w_n, \ldots w_0$,
obtention de $S$

TCP

1.4. $(w_n, n)$

TCGC

2.3.
PayReq=($ld_{BBS}$,
$ld_{transaction}$,
montant,$w,q,w',k,c,T$)

2.5.2. PayAuth

1.2. Reg=($ld,m,S$)
avec $m=w_0,n$)

2.1.3
InfoResp=($ld_{appli}$,$ld_{BBS}$,
$ld_{transaction}$,
montant,$c,T$)

2.1.1.
InfoReq=($ld_{appli}$,durée,$c$)

2.5.1. PayAuth=(auth,A)

2.4. Vérifie PayReq,remplace
1.3. Vérifie $S$,
stocke $(w_0,n,w_0,n,S)$
$(w_0,n,w,q,S)$ par $(w_0,n,w',q-k,S)$,
calcul auth=($ld_{BBS}$,$ld_{transaction}$,montant,$c,T$)
2.1.2. Calcul $T$
2.6. Vérifie PayAuth.
SCP
et A=sign(auth)
2.7. Délivre le bien (ticket)

_**FIG.4**_

BBS

EP 1 779 340 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0146920 A

**Littérature non-brevet citée dans la description**

- **Ellis Chi.** Evaluation of Micropayment Schemes. *HP LABORATORIES TECHNICAL REPORT no 97-14,* 13 Janvier 1997